# EUROPEAN PATENT SPECIFICATION

(11) **EP 4 302 858 B1**
(45) Date of publication and mention of the grant of the patent: **25.12.2024**
(21) Application number: 23183262.7
(22) Date of filing: 04.07.2023
(51) Int. Cl.: B01D 46/00, B01D 46/10

(54) **FILTER COVER**
FILTERDECKEL
COUVERCLE DE FILTRE

(30) Priority: 06.07.2022 IT 202200014281
(43) Date of publication of application: 10.01.2024
(73) Proprietor: DENSO THERMAL SYSTEMS S.p.A., 10046 Poirino (Torino) (IT)
(72) Inventor: FERRARESE, Claudio, I-10046 POIRINO (Torino) (IT)
(74) Representative: Vanzini, Christian

(56) References cited:
- WO-A1-2010/015319
- US-A1- 2018 353 890
- US-A1- 2022 099 054

## Description

The present invention pertains to a filter cover configured to be removably fixed to a filter housing adapted to receive a filtering element, the filter cover being formed as a plate of plastics material having a substantially rectangular shape when viewed in plan view,
wherein on a first side of the filter cover there is formed at least one outer snap-fit connection element protruding beyond a lateral edge of the filter cover and configured to engage a relevant outer formation formed close to an edge of an opening of the filter housing, said at least one outer connection element comprising an elastically deformable tab comprising a coupling hook at one end, and a manually operable release portion at an opposite end. Such a filter cover is for instance known from WO2010/015319A1.

An object of the present invention is to provide a solution that allows the filter cover to be fixed to the filter housing without screws, minimizing the noise in the passenger compartment related to the vibrations between the filter cover and the surrounding components.

In view of this object, the invention pertains to a filter cover having the features defined above, wherein on a second side of the filter cover, opposite to the first side, there is formed at least one inner snap-fit connection element protruding from a housing-side face of the filter cover and configured to engage a relevant inner formation formed within the filter housing, said at least one inner connection element comprising an elastically deformable tab and having a round-shaped coupling protrusion at one end.

The elastically deformable inner connection element arranged on the opposite side of the cover relative to the outer connection element, by pressing against the relevant inner formation, allows for the compensation of any play between the components and thus reduces the vibrations of the filter cover and the associated noise.

Further features and advantages of the filter cover according to the invention will become clearer from the following detailed description of an embodiment of the invention, made with reference to the accompanying drawings, provided purely by way of non-limiting example, wherein
Fig. 1 is a partial view of an air conditioning unit provided with a filter cover according to the invention;
Fig. 2a and 2b are perspective views of the filter cover from the outer side and the housing side, respectively;
Fig. 3 is a cross-sectional view taken along the line III-III of Fig. 1;
Fig. 4 is an enlarged scale view of a detail taken along the cross-section IV-IV of Fig. 1;
Fig. 5 is a view, from inside a filter housing, of the air conditioning unit in Fig. 1, without the filtering element;
Fig. 6 is a further perspective view of the filter housing from which the filter cover and filtering element have been removed; and
Fig. 7 and 8 show a detail of the filter housing during different stages of mounting the filter cover.

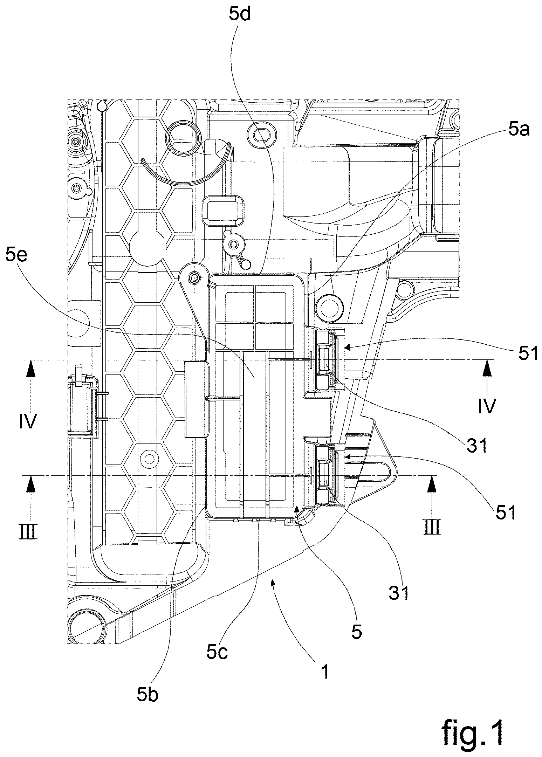

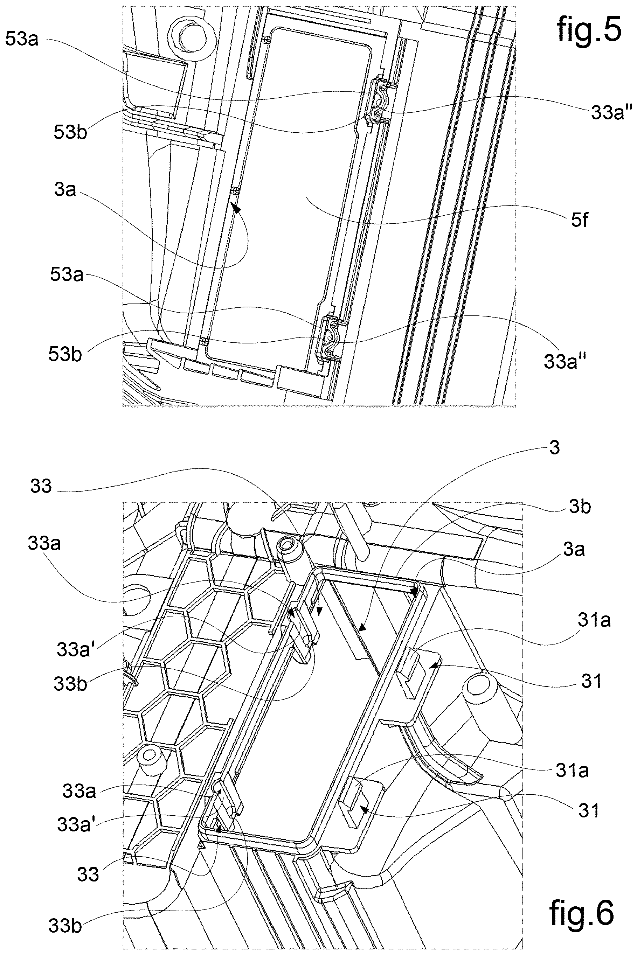

Fig. 1 shows a part of an air conditioning unit of a vehicle. In particular, Fig. 1 shows an enclosure 1 of plastics material, within which various components of the air conditioning unit are arranged in a conventional manner. In the portion of the enclosure 1 shown in Fig. 1, there is formed a filter housing 3 (not shown in Fig. 1, but shown in Fig. 5 and 6) on which a cover 5, shown in plan view in Fig. 1, is removably fixed.

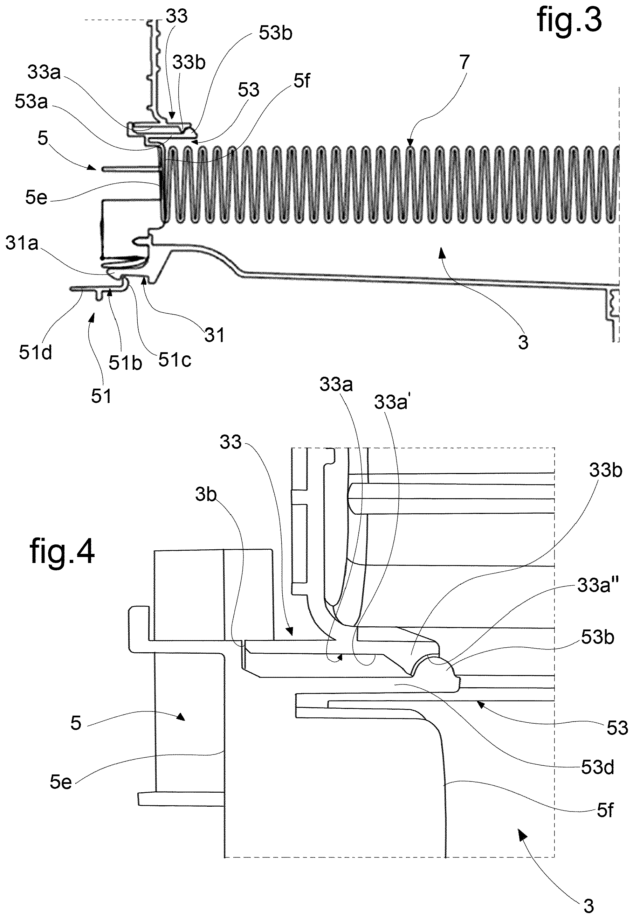

The filter housing 3 is adapted to receive a filtering element 7, shown in Fig. 3. In the example shown, the filtering element 7 has a substantially plate-like shape and is formed from a zigzag-folded filtering sheet 2. The structure of the filtering element may be different from that depicted in the figures, and is not essential to the invention. The filter housing 3 may be, for example, a frame or a box, and is configured to permit a flow of fluid, e.g., air, to pass through the filtering element 7 according to a direction approximately orthogonal to a pair of faces of the filtering element.

The filter cover 5 is a plate-shaped element formed in one piece of plastics material. On the filter cover 5 there may conventionally be provided a gasket (not shown) to seal the filter cover 5 tightly onto an opening 3a of the filter housing 3.

As may be seen in particular in Fig. 1, the filter cover 5 has a substantially rectangular shape according to a plan view, comprising two long sides 5a and 5b opposite each other and two short sides 5c and 5d interconnecting the long sides of the rectangular shape. In the filter cover 5, an outer-side face 5e may also be identified, which in the mounted condition of the filter cover 5 faces toward the outside, and a housing-side face 5f which is opposite to the outer-side face 5e and, in the mounted condition of the filter cover 5, faces toward the inside of the filter housing 3. More generally, the terms "outer" and "inner" as used in this description are to be understood as "outside the compartment defined by the filter housing" (specifically, outside the opening 3a) and "inside the compartment defined by the filter housing," respectively.

On a first side of the filter cover 5, which in the example shown is one of the long sides denoted by 5a, there is formed a plurality of outer snap-fit connection elements 51 (according to a less effective embodiment, there may be only one outer snap-fit connection element). Each of the outer snap-fit connection elements 51 is formed as a formation protruding beyond the lateral edge of the filter cover 5, as may be seen particularly in Fig. 1. As may be seen in Fig. 1 and 3, each of the outer snap-fit connection elements 51 is configured to engage a relevant outer formation 31 formed close to the edge 3b of the opening 3a of the filter housing 3.

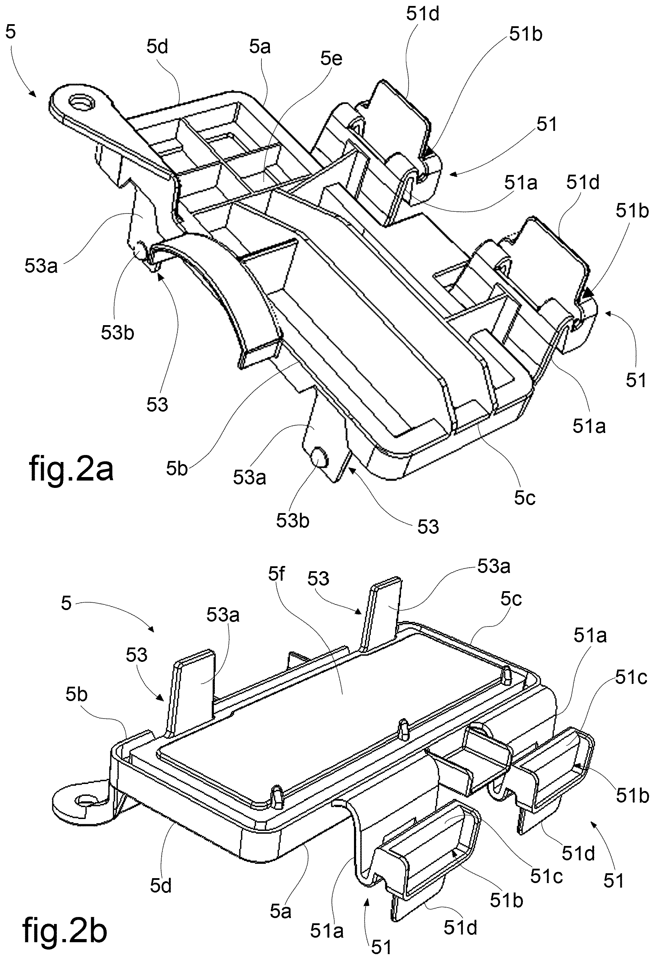

Referring to Fig. 2a and 2b, each outer snap-fit connection element 51 comprises a support portion 51a that extends laterally toward the outside of the filter cover 5. On a distal end of the support portion 51a there is formed an elastically deformable tab 51b extending in a direction substantially orthogonal to the plane of the filter cover 5. The tab 51a has, at one inner end, a coupling tooth 51c (see Fig. 3) and, at an outer end opposite the aforesaid inner end, a manually operable release portion 51d.

The relevant outer formation 31 formed near the edge 3b of the opening 3a of the filter housing 3 comprises a coupling tooth 31a on one of its distal ends. The coupling tooth 31a has a sawtooth contour which, during the initial stage of the movement for mounting the filter cover 5 on the filter housing 3 (from left to right in the representation in Fig. 3), induces the deformation/rotation of the tab 51b, which thus overrides the coupling tooth 31a, bringing the coupling hook 51c behind the stepped part of the sawtooth contour of the coupling tooth 31a.

To operate the release of the filter cover 5, it is necessary to act with a finger on the release portion 51d of the tab 51b to rotate it, and then lift the coupling hook 51c and disengage it from the coupling tooth 31a.

Referring to Fig. 2a through 5, the filter cover 5 further comprises a plurality of inner snap-fit connection elements 53 formed on the second long side 5b (according to a less effective embodiment, there may be only one inner snap-fit connection element). Preferably, there is a number of inner snap-fit connection elements 53 equal to the number of outer snap-fit connection elements 51. Preferably, each inner snap-fit connection element 53 is, according to a plan view of the filter cover, aligned with a relevant outer snap-fit connection element 51.

The inner snap-fit connection elements 53 protrude from the housing-side face 5f of the filter cover 5 according to a direction substantially orthogonal to the plane of the filter cover 5. The inner snap-fit connection elements 53 are configured to engage respective inner formations 33 formed inside the filter housing 3. Each inner connection element 53 comprises an elastically deformable tab 53a and has at one distal end a round-shaped coupling protrusion 53b. The coupling protrusion 53b protrudes laterally outwards from the tab 53a of the inner connection element 53. Preferably, the coupling protrusion 53b is shaped like a dome, in particular a spherical dome.

Referring to Fig. 3 through 8, the relevant inner formation 33 formed inside the filter housing 3 comprises a groove 33a extending from the edge 3b of the opening 3a of the filter housing 3 in the longitudinal direction of the filter housing 3. In the present description, "longitudinal direction" means the direction according to which the filtering element 7 is inserted into the filter housing 3 through the opening 3a, as well as the mounting direction of the filter cover 5 (in other words, the direction from left to right in Fig. 3).

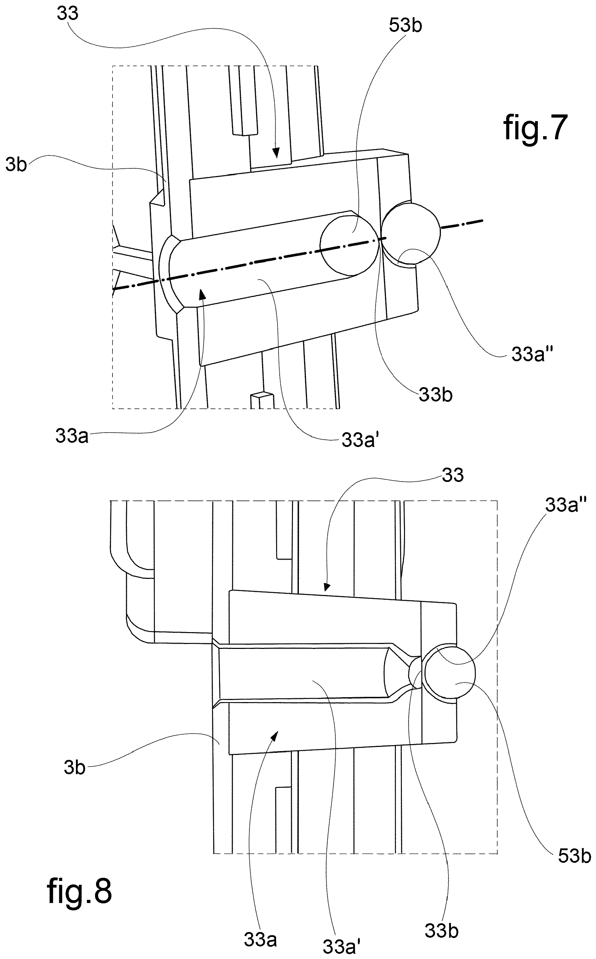

The groove 33a is formed on a portion of the wall, partition, or protrusion of the filter housing 3 that extends from the edge 3b of the opening 3a and faces toward the inside of the filter housing 3. The groove 33a is adapted to receive the coupling protrusion 53b of the inner connection element 53. Along the groove 33a an obstruction 33b is arranged that separates the groove 33a into a first portion 33a' and a second portion 33a". Along the first portion 33a', the coupling protrusion 53b is capable of sliding in an initial stage of mounting the filter cover 5 on the filter housing 3 (Fig. 7). At the second portion 33 a", the coupling protrusion 53b is capable of snap-fitting to the obstruction 33b (Fig. 8).

The end of the first portion 33a' of the groove 33a has a ramp-shaped contour, which during the initial stage of the movement of mounting the filter cover 5 on the filter housing 3 induces the deformation of the tab 53a, which thus overrides the obstruction 33b, bringing the coupling protrusion 53b behind the obstruction 33b. The second portion 33a" of the groove 33a at the obstruction 33b has a round-shaped contour that preferably matches with the contour of the coupling protrusion 53b.

The groove 33a is dimensioned in such a way that the coupling protrusion 53b is capable of reaching the second portion 33a" when the outer snap-fit connection element 51 snap-fits to the relevant outer formation 31.

With the arrangement described above, when the outer snap-fit connection element 51 is disengaged by manually acting on the release portion 51d of the tab 51b, and the removal of the filter cover 5 is thus operated, the inner snap-fit connection element 53 does not prevent the extraction of the filter cover 5.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. A filter cover (5) configured to be removably fixed to a filter housing (3) adapted to receive a filtering element (7), the filter cover (5) being formed as a plate of plastics material having a substantially rectangular shape when viewed in plan view,
wherein on a first side (5a) of the filter cover (5) there is formed at least one outer snap-fit connection element (51) protruding beyond a lateral edge of the filter cover (5) and configured to engage a respective outer formation (31) formed close to an edge (3b) of an opening (3a) of the filter housing (3), said at least one outer snap-fit connection element comprising an elastically deformable tab (51b) having a coupling hook (5 1c) at one end, and a manually operable release portion (51d) at an opposite end,
the filter cover (5) being **characterized in that** on a second side (5b) of the filter cover (5), opposite to the first side (5a), there is formed at least one inner snap-fit connection element (53) protruding from a housing-side face (5f) of the filter cover (5) and configured to engage a respective inner formation (33) formed within the filter housing (3), said at least one inner snap-fit connection element comprising an elastically deformable tab (53a) having a round-shaped coupling protrusion (53b) at one end.

2. The filter cover according to claim 1, wherein the first side (5a) and the second side (5b) of the filter cover (5) are the long sides of the substantially rectangular shape, and wherein on the first side (5a) there are formed more outer snap-fit connection elements (51), and on the second side (5b) there are formed more inner snap-fit connection elements (53).

3. The filter cover according to claim 1 or 2, wherein the coupling protrusion (53b) protrudes laterally outwards from the tab (53a) of the inner snap-fit connection element (53).

4. The filter cover according to any of the preceding claims, wherein the coupling protrusion (53b) is dome-shaped, preferably spherical-dome shaped.

5. An assembly comprising a filter housing (3) adapted to receive a filtering element (7), and a filter cover (5) according to any of the preceding claims, configured to be removably fixed to the filter housing (3).

6. The assembly according to claim 5, wherein said inner formation (33) comprises a groove (33a) extending from the edge (3b) of the opening (3a) of the filter housing (3) in the longitudinal direction of the filter housing (3), said groove facing toward the inside of the filter housing (3) and being adapted to receive the coupling protrusion (53b) of the inner snap-fit connection element (53), wherein along the groove (33a) there is arranged an obstruction (33b) separating the groove (33a) into a first portion (33a'), along which the coupling protrusion (53b) is slidable in an initial step of mounting the filter cover (5) to the filter housing (3), and a second portion (33a") at which the coupling protrusion (53b) is capable of snap-fitting to the obstruction (33b).

7. The assembly according to claim 6, wherein the groove (33a) is dimensioned in such a way that the coupling protrusion (53b) is capable of reaching the second portion (33a") when the outer snap-fit connection element (51) snap-fits to the respective outer formation (31).

8. The assembly according to any of claims from 5 to 7, wherein one end of the first portion (33a') of the groove (33a) at the obstruction (33b) has a ramp-shaped contour.

9. The assembly according to any of claims from 5 to 8, wherein one end of the second portion (33a") of the groove (33a) at the obstruction (33b) has a round-shaped contour which preferably matches with the contour of the coupling protrusion (53b).

## Patentansprüche

1. Filterabdeckung (5), die konfiguriert ist zum entfernbaren Befestigen an einem Filtergehäuse (3), das angepasst ist zum Aufnehmen eines Filterelements (7), wobei die Filterabdeckung (5) als eine Platte aus einem Kunststoffmaterial gebildet ist, die in Ebenenansicht betrachtet eine im Wesentlichen rechteckige Form aufweist,
wobei auf einer ersten Seite (5a) der Filterabdeckung (5) mindestens ein äußeres schnappbares Verbindungselement (51) gebildet ist, das jenseits eines lateralen Rands der Filterabdeckung (5) vorsteht und konfiguriert ist zum Eingriff in eine jeweilige äußere Anordnung(31), die nahe eines Rands (3b) einer Öffnung (3a) des Filtergehäuse (3) gebildet ist, wobei das mindestens eine äußere schnappbare Verbindungselement eine elastisch verformbare Lasche (51b) mit einem Verbindungshaken (51c) an einem Ende und einen manuell betätigbaren Freigabebereich (51d) an einem gegenüberliegenden Ende aufweist,
wobei die Filterabdeckung (5) **dadurch gekennzeichnet ist, dass** auf einer zweiten Seite (5b) der Filterabdeckung (5), der ersten Seite (5a) gegenüberliegend, mindestens ein inneres schnappbares Verbindungselement (53) gebildet ist, das von einer Gehäuseseitenfläche (5f) der Filterabdeckung (5) vorsteht und konfiguriert ist für einen Eingriff in eine jeweilige innere Anordnung (33), die in dem Filtergehäuse (3) gebildet ist, wobei das mindestens eine innere schnappbare Verbindungselement eine elastisch verformbare Lasche (53a) aufweist, die an einem Ende einen runden Verbindungsvorsprung (53b) hat.

2. Filterabdeckung nach Anspruch 1, bei der die erste Seite (5a) und die zweite Seite (5b) der Filterabdeckung (5) die Längsseiten der im Wesentlichen rechteckigen Form sind, und auf der ersten Seite (5a) mehrere äußere schnappbare Verbindungselemente (51) gebildet sind, und auf der zweiten Seite (5b) mehrere innere schnappbare Verbindungselemente (53) gebildet sind.

3. Filterabdeckung nach Anspruch 1 oder 2, bei der der Verbindungsvorsprung (53b) von der Lasche (53a) des inneren schnappbaren Verbindungselements (53) lateral nach außen vorsteht.

4. Filterabdeckung nach einem der vorangegangenen Ansprüche, bei der der Verbindungsvorsprung (53b) kuppelförmig, vorzugsweise kugelförmig kuppelförmig ist.

5. Anordnung mit einem Filtergehäuse (3), das angepasst ist zum Aufnehmen eines Filterelements (7), und mit einer Filterabdeckung (5) nach einem der vorangegangenen Ansprüche, die konfiguriert ist zur entfernbaren Befestigung an dem Filtergehäuse (3).

6. Anordnung nach Anspruch 5, bei der die innere Anordnung (33) eine Rille (33a) aufweist, die sich von dem Rand (3b) der Öffnung (3a) des Filtergehäuses (3) in der Längsrichtung des Filtergehäuses (3) erstreckt, wobei die Rille dem Inneren des Filtergehäuses (3) zugewandt und angepasst ist zum Aufnehmen des Verbindungsvorsprungs (53b) des inneren schnappbaren Verbindungselements (53), wobei entlang der Rille (33a) ein Hindernis (33b) angeordnet ist, das die Rille (33a) in einen ersten Bereich (33a') teilt, entlang dem der Verbindungsvorsprung (53b) in einem Anfangsschritt der Montage der Filterabdeckung (5) an dem Filtergehäuse (3) verschiebbar ist, und in einen zweiten Bereich (33a"), an dem der Verbindungsvorsprung (53b) eine Schnappverbindung mit dem Hindernis (33b) eingehen kann.

7. Anordnung nach Anspruch 6, bei der die Rille (33a) derart dimensioniert ist, dass der Verbindungsvorsprung (53b) den zweiten Bereich (33a") erreichen kann, wenn das äußere schnappbare Verbindungselement (51) in die jeweilige äußere Anordnung (31) einschnappt.

8. Anordnung nach einem der Ansprüche 5 bis 7, bei der ein Ende des ersten Bereichs (33a') der Rille (33a) an dem Hindernis (33b) eine rampenförmige Kontur aufweist.

9. Anordnung nach einem der Ansprüche 5 bis 8, bei der ein Ende des zweiten Bereichs (33a") der Rille 33a) an dem Hindernis (33b) eine runde Kontur aufweist, die vorzugsweise mit der Kontur des Verbindungsvorsprungs (53b) zusammenpasst.

## Revendications

1. Couvercle de filtre (5) configuré pour être fixé de manière amovible à un boîtier de filtre (3) adapté pour recevoir un élément filtrant (7), le couvercle de filtre (5) étant formé comme une plaque en matière plastique ayant une forme sensiblement rectangulaire lorsqu'observée en vue en plan,
dans lequel, sur un premier côté (5a) du couvercle de filtre (5), est formé au moins un élément extérieur de liaison par encliquetage (51) faisant saillie au-delà d'un bord latéral du couvercle de filtre (5) et configuré pour coopérer avec une formation extérieure respective (31) formée à proximité d'un bord (3b) d'une ouverture (3a) du boîtier de filtre (3), ledit au moins un élément extérieur de liaison par encliquetage comprenant une languette élastiquement déformable (51b) ayant un crochet de couplage (51c) au niveau d'une extrémité, et une partie de libération actionnable manuellement (51d) au niveau d'une extrémité opposée,
le couvercle de filtre (5) étant **caractérisé en ce que**, sur un second côté (5b) du couvercle de filtre (5), opposé au premier côté (5a), est formé au moins un élément intérieur de liaison par encliquetage (53) faisant saillie depuis une face côté boîtier (5f) du couvercle de filtre (5) et configuré pour coopérer avec une formation intérieure respective (33) formée à l'intérieur du boîtier de filtre (3), ledit au moins un élément intérieur de liaison par encliquetage comprenant une languette élastiquement déformable (53a) ayant une saillie de couplage de forme arrondie (53b) au niveau d'une extrémité.

2. Couvercle de filtre selon la revendication 1, dans lequel le premier côté (5a) et le second côté (5b) du couvercle de filtre (5) sont les côtés longs de la forme sensiblement rectangulaire, et dans lequel, sur le premier côté (5a), sont formés plus d'éléments extérieurs de liaison par encliquetage (51), et, sur le second côté (5b), sont formés plus d'éléments intérieurs de liaison par encliquetage (53).

3. Couvercle de filtre selon la revendication 1 ou 2, dans lequel la saillie de couplage (53b) fait saillie latéralement vers l'extérieur depuis la languette (53a) de l'élément intérieur de liaison par encliquetage (53).

4. Couvercle de filtre selon l'une quelconque des revendications précédentes, dans lequel la saillie de couplage (53b) est en forme de dôme, de préférence en forme de dôme sphérique.

5. Ensemble comprenant un boîtier de filtre (3) adapté pour recevoir un élément filtrant (7), et un couvercle de filtre (5) selon l'une quelconque des revendications précédentes, configuré pour être fixé de manière amovible au boîtier de filtre (3).

6. Ensemble selon la revendication 5, dans lequel ladite formation intérieure (33) comprend une rainure (33a) s'étendant depuis le bord (3b) de l'ouverture (3a) du boîtier de filtre (3) dans la direction longitudinale du boîtier de filtre (3), ladite rainure faisant face vers l'intérieur du boîtier de filtre (3) et étant adaptée pour recevoir la saillie de couplage (53b) de l'élément intérieur de liaison par encliquetage (53), dans lequel, le long de la rainure (33a), est disposée une obstruction (33b) séparant la rainure (33a) en une première partie (33a'), le long de laquelle la saillie de couplage (53b) peut coulisser lors d'une étape initiale de montage du couvercle de filtre (5) sur le boîtier de filtre (3), et en une seconde partie (33a") au niveau de laquelle la saillie de couplage (53b) est capable de s'encliqueter sur l'obstruction (33b).

7. Ensemble selon la revendication 6, dans lequel la rainure (33a) est dimensionnée de telle sorte que la saillie de couplage (53b) est capable d'atteindre la seconde partie (33a") lorsque l'élément extérieur de liaison par encliquetage (51) est encliqueté sur la formation extérieure respective (31).

8. Ensemble selon l'une quelconque des revendications 5 à 7, dans lequel une extrémité de la première partie (33a') de la rainure (33a) au niveau de l'obstruction (33b) a un contour en forme de rampe.

9. Ensemble selon l'une quelconque des revendications 5 à 8, dans lequel une extrémité de la seconde partie (33") de la rainure (33a) au niveau de l'obstruction (33b) a un contour de forme arrondie qui coïncide de préférence avec le contour de la saillie de couplage (53b).
